(19) Europäisches Patentamt
European Patent Office
Office européen des brevets

(11) **EP 1 998 618 B1**

(12) **EUROPEAN PATENT SPECIFICATION**

(45) Date of publication and mention
of the grant of the patent:
**02.06.2010 Bulletin 2010/22**

(51) Int Cl.:
***A01N 47/14*** *(2006.01)* ***A01P 13/02*** *(2006.01)*

(21) Application number: **07723078.7**

(22) Date of filing: **07.03.2007**

(86) International application number:
**PCT/EP2007/001934**

(87) International publication number:
**WO 2007/107244 (27.09.2007 Gazette 2007/39)**

(54) **ALGAE-CONTROLLING AGENTS**

ALGEN KONTROLLIERENDE MITTEL

AGENTS PERMETTANT LE CONTRÔLE D'ALGUES

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **20.03.2006 JP 2006076967**

(43) Date of publication of application:
**10.12.2008 Bulletin 2008/50**

(73) Proprietor: **Bayer CropScience AG
40789 Monheim (DE)**

(72) Inventors:
• **HATTA, Takayuki
Konan-shi, Shiga 520-3242 (JP)**
• **KAMOTO, Mihoko
Koga-shi, Ibaraki 306-0011 (JP)**
• **SHIGYO, Takuma
Yokohama-shi, Kanagawa 224-0033 (JP)**

(56) References cited:
**WO-A-96/20596 WO-A-02/067679**

• **ELLIOTT M L: "Use of fungicides to control blue-green algae on Bermuda grass putting-green surfaces" CROP PROTECTION, vol. 17, no. 8, November 1998 (1998-11), pages 631-637, XP002431975 ISSN: 0261-2194**

Remarks:
The file contains technical information submitted after the application was filed and not included in this specification

**Description**

The present invention relates to algae-controlling agents. More specifically the present invention relates to agents to control algae developing on the lawn.

Recently, various algae have been developing on the golf course, particularly on the putting green and cause big problems to greenkeepers, because they not only weaken the grass but also spoil the appearance and bring about lower putting quality. The cause of algae development is considered to be the maintenance method of the green necessary as a sport turf such as sanding of the green, low cut of grass, little fertilization, etc. However, there are very few agents to control them for the moment.

M.L. Ellioff ("Use of fungicides to control blue-green algae on Bermuda grass putting green surfaces", Crop.Prod., Vol. 17, No. 8, 11/98, 631-637 describes different fungicides to control algae, for example chlorothalonil and mancozeb. The efficacy of these fungicides is not high enough to control the growing of the algae, especially algae of the type of Chlorophyceae and Cyanophyta.

As algae developing on the putting green there can be mentioned *Chlorophyceae, Cyanophyta* (*Cyanobacteria*), *Xanthophyceae, Bacillariophyceae,* etc. and particularly *Chlorophyceae* and *Cyanophyta* develop much and cause big damage.

Therefore it was an object of the present invention to provide a new effective process to control algae which are developing on the lawn.

As a result of intensively conducting research aiming at solving the above-mentioned problem, there have now been found that dithiocarbamate compounds have effect to efficiently control the development of algae among vegetation on the lawn and completed the present invention.

Thus, the present invention is directed to the use of probineb as active ingredient for controlling algae developing on the lawn.

The controlling agents of the present invention show excellent algicidal effect against algae, particularly *Chlorophyceae, Cyanophyta,* etc. by application not only before their development but also after the development.

The controlling agents, according to the present invention, show a strong algicidal action and can be used in practice to control undesirable algae.

The kind of algae to be controlled by using the agents of the present invention is not particularly restricted. As the present invention has the object to control algae developing on the lawn, all kinds of algae developing on the lawn are the object and specifically there can be mentioned, for example, algae belonging to *Chlorophyceae, Cyanophyta, Bacillariophyceae,* etc.

The controlling agents of the present invention can be used in the customary formulation forms. As such formulation forms there can be mentioned, for example, solutions, emulsions, wettable powders, suspensions, powders, granules, microcapsules, etc.

These formulations can be prepared by per se known methods. They can be prepared, for example, by mixing a dithiocarbamate compound together with extenders, namely liquid diluents or carriers, solid diluents or carriers, and occasionally further with surfactants, namely emulsifiers and/or dispersants.

In case of using water as extender, for example, organic solvents can be used as auxiliary solvent.

As liquid diluents or carriers there can be generally mentioned aromatic hydrocarbons (for example, xylene, toluene, alkylnaphthalene, etc.), chlorinated aromatic or chlorinated aliphatic hydrocarbons (for example, chlorobenzenes, ethylene chlorides, methylene chloride, etc.), aliphatic hydrocarbons [for example, cyclohexane etc., paraffins (for example, mineral oil fractions etc.)], alcohols (for example, butanol, glycols, etc.) and their ethers, esters, etc., ketones (for example, acetone, methyl ethyl ketone, methyl isobutyl ketone, cyclohexanone, etc.), strongly polar solvents (for example, dimethylformamide, dimethyl sulfoxide, etc.), water, etc.

As solid diluents or carriers there can be mentioned, for example, ground natural minerals (for example, kaolin, clay, talc, chalk, quartz, attapulgite, montmorillonite, diatomaceous earth, etc.), ground synthetic minerals (for example, highly dispersed silicic acid, alumina, silicates, etc.).

As solid carriers for granules there can be used, for example, crushed and fractionated rocks (for example, calcite, marble, pumice, sepiolite, dolomite, etc.) synthetic granules of inorganic and organic meals, particles of organic materials (for example, saw dust, coconut shells, maize cobs, tobacco stalks, etc.) etc.

As surfactants there can be mentioned, for example, anionic surfactants such as ligninsulfonates, alkylphosphates, fatty acid salts, alkylsulfonates, alkylbenzenesulfonates, alkylnaphthalenesulfonates, naphthalenesulfonic acid-formalin-condensates, polyoxyalkylene alkyl ether sulfates, polyoxyalkylene alkylphenyl ether sulfates, polyoxyalkylene tristyrylphenyl ether sulfates, polyoxyethylene-polyoxypropylene block polymer sulfates, dialkylsulfosuccinates, polyoxyalkylene alkyl ether sulfosuccinates, polyoxyalkylene alkylphenyl ether phosphates, etc.; nonionic surfactants such as polyoxyalkylene alkylphenyl ethers, polyoxyalkylene fatty acid esters, polyoxyalkylene tristyrylphenyl ethers, polyoxyalkylene alkyl amines, sorbitan fatty acid esters, sucrose fatty acid esters, polyoxyalkylene sorbitan esters, glycerol fatty acid esters, polyoxyethylene-polyoxypropylene block polymers, polyoxyethylene-polyoxypropylene block polymer alkylphenyl ethers, etc.; amphoteric surfactants such as aliphatic alkylbetaine, alkylammonium salts, etc.; cationic surfactants such as alkylpyridinium salts, polyethylene polyamine fatty acid amides, etc.

To the controlling agents of the present invention, in addition to the above-mentioned additives, there can be further compounded, for example, white carbon, colorants, etc. as agricultural chemical auxiliaries.

The concentration of the active compounds in a practical application forms in case of treatment onto the lawn of the controlling agents of the present invention can be varied in a substantial range but can be in the range of generally 10-90 % by weight, preferably 40-80 % by weight.

Then, the present invention will be described more specifically by examples. The present invention, however, should not be restricted only to them in any way.

Test example 1: Controlling test against algae

Test algae

Algae were collected from the golf courses whose bent green algae had been developing on. After the cultivation in a pot, they were subjected to the tests. The tested algae were of the following 3 kinds: *Klebsormidium* of *Chlorophyceae*, *Phormidium* (trichome) and *Chroococcus* (single cell) of *Cyanophyta.*

Test method

In a 10cm (diameter) pot a mixture of river sand and mountain soil were put to about half volume and filling soil for grass (fine sand) was placed thereon. Each grown algae was suspended in water and each 1ml of the suspension was dropped to 9 points per pot. After multiplication for 2 weeks they were subjected to the effect test.

70% Propineb water dispersible granules as test agents was diluted with water to a prescribed concentration and sprayed 0.5L per 1m$^2$ by a hand sprayer. Test scale was 1 section, 1 pot and 2 repetitions.

The judgment of effect was studied by visual observation prescribed number of days after the day of the agents application. The grade of algae development was evaluated in coefficient with the following standard for each colony developed in each inoculated spot and the controlling rate was calculated from the average value by usual method.

| Coefficient | 0: | Few colony developed (disappeared) |
|---|---|---|
| | 1: | Colony developed a little (remained a little) |
| | 2: | Colony developed clearly (remained but not expanded from the time of spraying) |
| | 3: | Colony developed and expanded (more expanded than the time of spraying) |

Note: Description in parentheses is the test evaluation standard in case that the agents was sprayed after the colony development. ,

$$\text{Controlling rate (\%)} = \frac{Tx（To}{Cx（Co}（100$$

TX: Average coefficient of treated section on X days after the spraying
T0: Average coefficient of treated section before the spraying
CX: Average coefficient of non-treated section on X days after the spraying
C0: Average coefficient of non-treated section before the spraying

The results are shown in Table 1 - Table 3.

Table 1: Algicidal effect against the developed Klebsormidium (Chlorophyceae) (controlling rate %)

| Test agents | Amount of active ingredient mg/m$^2$ | Sprayed amount/m$^2$ | 7 Days after spray | 21 Days after spray |
|---|---|---|---|---|
| Propineb | 2000 | 0.5 L | 100% | 100% |
| | 1000 | 0.5 L | 97.5 | 100 |
| | 500 | 0.5 L | 92.5 | 99 |
| No treatment | - | ( | 0 | 0 |

Table 2: Algicidal effect against the developed Phormidium (Cyanophyta) (controlling rate %)

| Test agents | Amount of active ingredient mg/m2 | Sprayed amount/m2 | 7 Days after spray | 21 Days after spray |
|---|---|---|---|---|
| Propineb | 2000 | 0.5 L | 30% | 85% |
| | 1000 | 0.5 L | 20 | 82.5 |
| | 500 | 0.5 L | 10 | 80 |
| No treatment | - | - | 0 | 0 |

Table 3: Algicidal effect against the developed *Chroococcus* (*Cyanophyta*) (controlling rate %)

| Test agents | Amount of active ingredient mg/m$^2$ | Sprayed amount/m$^2$ | 7 Days after spray |
|---|---|---|---|
| Propineb | 1000 | 0.5 L | 89% |
| No treatment | - | - | 0 |

Test example 2: Test of preventive effect and residual effect against algae

Test method

The same kind of pot as Test example 1 (before algae inoculation) is treated with an agents of the prescribed concentration and the suspension of *Chroococcus* is inoculated 1 day and 9 days after the treatment. The grade of development of algae is studied 14 days after the inoculation and the controlling rate is calculated in the same manner as Test example 1. The results are shown in Table 4.

Table 4: Preventive effect against *Chroococcus* (*Cyanophyta*) (controlling rate %)

| Test agents | Amount of active ingredient mg/m$^2$ | Sprayed amount/m$^2$ | Inoculated 1 day after treatment | Inoculated 9 days after treatment |
|---|---|---|---|---|
| Propineb | 1000 | 0.5 L | 89% | |
| | 1000 | 0.5 L | | 85% |
| No treatment | - | - | 0 | 0 |

## Claims

1.  Use of probineb as active ingredient for controlling algae developing on the lawn.

## Patentansprüche

1.  Verwendung von Probineb als aktivem Bestandteil zur Kontrolle der Algenentwicklung auf Rasenflächen.

## Revendications

1.  Utilisation de probineb comme ingrédient actif pour le contrôle d'algues se développant sur la pelouse.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M.L. Ellioff.** Use of fungicides to control blue-green algae on Bermuda grass putting green surfaces. *Crop.Prod.,* vol. 17 (8), 11, 98, 631-637